# EUROPEAN PATENT SPECIFICATION

(11) **EP 2 363 336 B1**
(45) Date of publication and mention of the grant of the patent: **19.09.2012**
(21) Application number: 10155149.7
(22) Date of filing: 02.03.2010
(51) Int. Cl.: B62D 21/02, B62D 33/067, B60K 11/04

(54) **Chassis of a forward control truck with a tiltable cab**
Chassis eines Frontlenkers mit einem kippbaren Führerhaus
Châssis de camion à commande avant avec cabine basculable

(43) Date of publication of application: 07.09.2011
(73) Proprietor: IVECO MAGIRUS AG, 89079 Ulm (DE)
(72) Inventor: Spitzlberger, Juergen, 89075 Ulm (DE); Hoelzle, Franz, 89257 Illertissen (DE)
(74) Representative: Borsano, Corrado

(56) References cited:
- EP-A1- 0 940 323
- EP-A1- 1 754 652
- EP-A1- 2 138 381
- DE-A1- 4 006 418
- DE-A1- 19 637 920
- US-A1- 2006 219 462

## Description

The present invention relates to a chassis of a forward control truck with a tiltable cab, according to the preamble of claim 1.

Chassis of commercial vehicles are known in a variety of embodiments. An example of a known chassis is disclosed in the patent application EP 1754652. Typically such a chassis comprises a frame with two longitudinal members being spaced apart from each other and being connected by a number of traverse members extending laterally between these longitudinal members. The frame has the function to carry the different functional units of the vehicle. For example, at the front end of the vehicle, the frame provides a number of different supports for the tiltable cab arranged above the frame, a cooler at the front end of the frame, the wheel suspensions for the front axle, the steering gear, and a front underrun protection.

The arrangement of many different functional entities in the restricted space inside or above the frame can lead to problems and severe restrictions to the construction of the vehicle. Moreover, operational requirements related to the intended use of the vehicle can impose further restrictions to the vehicle layout. For example, in some types of commercial vehicles it is desired to arrange the longitudinal members of the frame with a close distance between them. However, this further limits the space enclosed by the front end of the frame. Consequently the available space for arranging the radiator of a cooler unit at the front end of the frame is further limited. Because there is a need for increased cooler units to meet the raising emission specifications, this problem becomes even more important.

It is therefore an object of the present invention to provide a chassis of the above kind that presents enhanced possibilities to arrange different functional units of the vehicle in the space enclosed by the frame at the front end of the chassis. In particular it is an object of the present invention to provide more space for enclosing a cooler unit with an enlarged width within the front end of the frame. These objects are achieved by a chassis comprising the features of claim 1.

According to the present invention, a chassis of a forward control truck with a tiltable cab comprises a pair of bearing plates disposed at the front end of the frame. Each bearing plate is flanged to a front end of one of the longitudinal members of the frame so that the bearing plates are spaced apart in a lateral direction. The distance between the bearing plates widens toward the front end of the frame. That is, the distance between the plates at the front end of the vehicle is larger than the distance between the longitudinal members behind the bearing plates.

The bearing plates are stabilized by a traverse member arranged at the front end of the frame. Each end of this traverse member is flanged to a front end of a respective bearing plate at one side of the vehicle. This traverse member has further the function to support the lower end of a cab suspension member. This cab suspension member can protrude in an upward direction from the plane in which the frame is located.

The bearing plates support two opposed cooler suspension members that are disposed laterally at the cooler unit. These cooler suspension members are flanged onto flat top bearing surfaces of the bearing plates. The cooler unit itself can be received within the widened space at the front ends of the bearing plates behind the traverse member.

In this arrangement a cooler of an enlarged width can be enclosed in a space between the front ends of the bearing plates, so that the distance between the longitudinal members in the remaining portion of the chassis can be relatively small. Moreover, the bearing plates have additional functions to carry the cab suspension and a traverse member for stabilizing the frame.

According to a preferred embodiment of the present invention, each cab suspension member is also flanged to the bearing plate to which the respective end of the traverse member is flanged.

In this construction the cab suspension member is flanged both to the traverse member as well as to the front end of the bearing plate. This provides a rigid mounting of the respective cab suspension member, for example, at one front edge of the vehicle.

Each of the bearing plates is provided with a support portion for receiving the front end of a leaf spring of a wheel suspension at the respective side of the chassis, said support member being located at a lower part of the bearing plate.

In this embodiment the bearing plate also serves as a support for a wheel suspension in the lower part of the frame. According to another preferred embodiment, each of the bearing plates is provided with a support portion for receiving one end of a front underrun protection member and/or a bumper extending between the bearing plates at the front end of the frame.

According to a preferred embodiment of the present invention, the chassis comprises a second traverse member extending laterally behind said first traverse member, said second traverse member being connected to the longitudinal members of the frame by support members that are flanged to inner surfaces of said longitudinal members, each of the support members supporting one end of the second traverse member. This second traverse member represents a further stabilizing element of the frame and can extend below a space for receiving an engine unit of the vehicle. It may not be connected to the bearing plates but is mounted to the longitudinal members of the frame by respective support members for connection.

Preferably the longitudinal members of the frame comprise bottom flanges extending inwardly, said support members for connecting the second traverse member to the longitudinal members there on the inner edges of these bottom flanges.

In this embodiment the bottom flanges of the longitudinal members are used to support the support members for connecting the second traverse members to the longitudinal members. This provides a further stabilization of the general construction of the frame.

According to a preferred embodiment, the chassis comprises engine support members for supporting an engine block of the truck, said engine support members being supported by upper support surfaces on top of the support members for connecting the second traverse member to the longitudinal members. In this embodiment the engine support members are directly supported by the support members at both ends of the second traverse member. The enginesupport members can have any desired construction and may comprise a block of an elastomer or rubber material as a dampening unit between the engineblock and the frame.

In the following a preferred example of one embodiment of the present invention will be explained in more detail with reference to the enclosed drawings.
- Fig. 1: is a perspective partial view of a chassis of a forward control truck with a tiltable cab, representing one embodiment of the present invention;
- Fig. 2 and 3: are perspective partial views of details of the chassis shown in Fig. 1;
- Fig. 4: is a perspective view of the chassis according to the embodiment of the present invention shown in Fig. 1, also showing a cooler suspended within this chassis;
- Fig. 5 and 6: are partial views of the chassis shown in Fig. 4 from different perspectives;
- Fig. 7: is a perspective view on the chassis of an embodiment shown in the foregoing figures, where parts of the front end of the chassis have been omitted; and
- Fig. 8 and 9: are further perspective views of the chassis shown in Fig. 7.

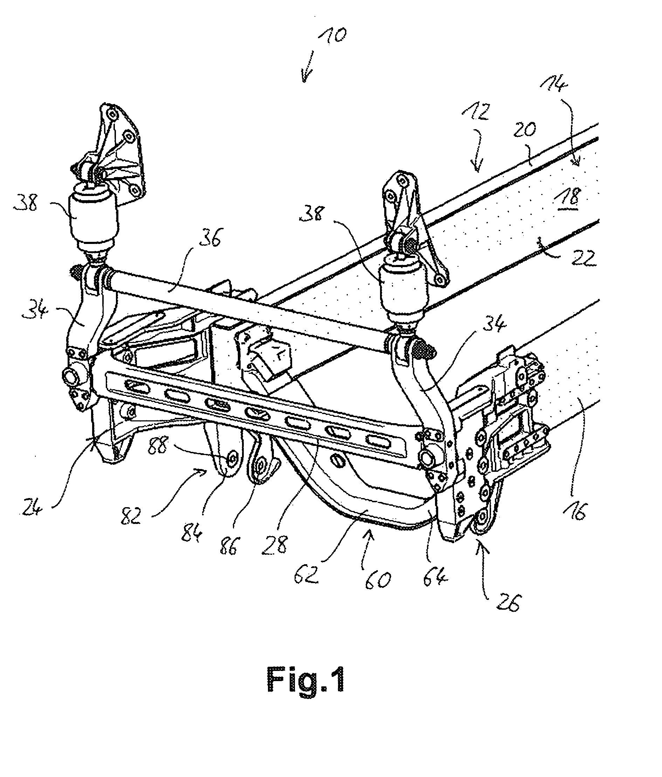

Fig. 1 shows a chassis 10 of a forward control truck with a tiltable cab. This chassis 10 comprises a frame 12 forming a structural part of the truck that carries numerous functional units of the truck vehicle. These units are not shown in the view of Fig. 1.

The frame 12 comprises two longitudinal members 14,16 that are spaced apart from each other. The longitudinal members 14,16 extend along the driving direction of the truck. In Fig. 1, the front end of the chassis 10 is visible. Each longitudinal member 14,16 comprises a vertical flange 18, a top flange 20 and a bottom flange 22. The top flange 20 and the bottom flange 22 extend from the upper and lower edges of the vertical flange 18 inwardly, so that each longitudinal member 14,16 has a C-shaped cross-section.

At the front end of each longitudinal member 14,16 with respect to the driving direction of the truck, one bearing plate 24,26 is mounted to form a front end of the frame 12. More precisely, the rear end of each bearing plate 24,26 is flanged to the outer surface of the vertical flange 18 of a respective longitudinal member 14,16. The two bearing plates 24,26 elongate the frame 12 in the forward direction and form the foremost structural part of the frame 12.

The front part of each bearing plate 24,26 is offset laterally in an outward direction, i. e. to the respective left/right side of the frame so that the distance between the bearing plates 24,26 widens towards the front end of the frame 12 between the rear portion of the plates 24,26 that is flanged to the longitudinal members 14,16 and the front end of the bearing plates 24,26. By this offset the free space enclosed by the pair of bearing plates 24,26 in the lateral direction (perpendicular to the extension direction of the longitudinal members 14,16) is extended with respect to the distance between the longitudinal members 14,16. Consequently functional units of the truck with a lateral width greater than the distance between the longitudinal members 14,16 can be enclosed between the front ends of the bearing plates 24,26.

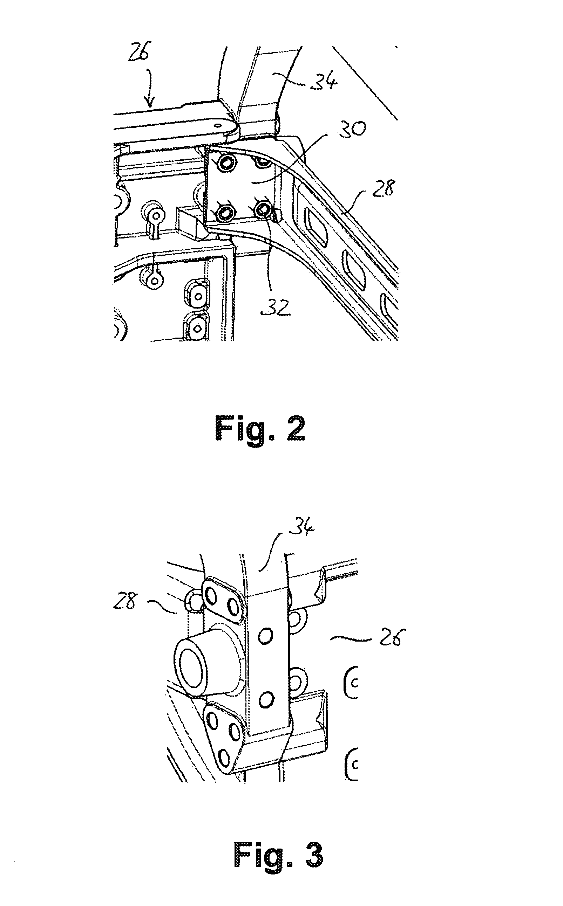

The front end of the frame 12 is stabilized by a first traverse member 28 extending horizontally in a lateral direction between the front ends of the bearing plates 24,26. The respective ends of this first traverse member 28 are mounted to inner surfaces of the bearing plates 24,26. As can be taken in detail from Fig. 2, the ends of the first traverse member 28 are provided with mounting flanges 30 extending perpendicular to the extension direction of the first traverse member 28, said mounting flanges 30 being flanged to the inner surfaces of the bearing plates 24,26 and fixed by bolts 32 extending through the mounting flanges 30 into threads provided within the bearing plates 24,26.

While only a rear part of the mounting flange 30 is used to fix the end of the traverse member 28 to the respective bearing plates 24,26, the remaining front portion of the flange member 30 is free to be flanged to a lower end of a cab suspension member 34 for supporting the cab (not shown) of the truck. A pair of two cab suspension members 34 is shown completely in Fig. 1. While the lower ends of these cab suspension members 34 are fixed to the front left and right corners of the frame 12, the upper ends of the cab suspension members 34 protrude upwardly from the frame. Because the cab suspension members 34 are slightly cranked, the upper ends of the cab suspension members 34 are slightly offset in the front direction of the truck with respect to the lower ends. At the upper ends of the cab suspension members 34, further parts of the cab suspension are mounted, including a traverse bar 36, damping elements 38 resting on each cab suspension member 34, and further parts connected with the upper ends of the damping members 38. It is noted that the cab suspension as such is known from the state of the art and does not represent a feature of the present invention.

Referring again to Fig. 2 and to Fig. 3, the lower end of each cab suspension member 34 is also flanged to a front surface 40 of the respective bearing plate 24,26. This means that each lower end of the cab suspension member 34 is flanged, on one hand, to the end of the first traverse member 28 and on the other hand to the bearing plate 24,26. Two adjacent mounting surfaces of the lower end of the respective cab suspension member 34, standing perpendicular to each other, are flanged to respective perpendicular flange surfaces of the mounting flange 30 of the first traverse member 28 and to the front surface 40 of the bearing plate 24,26.

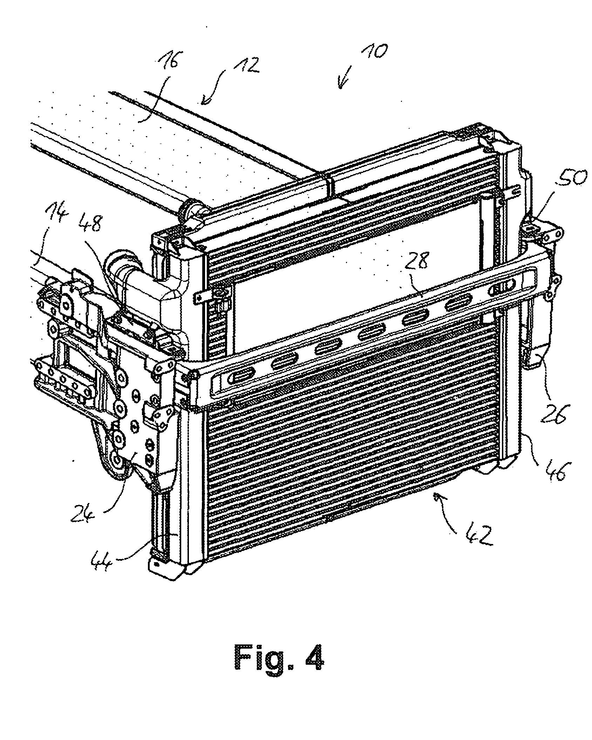

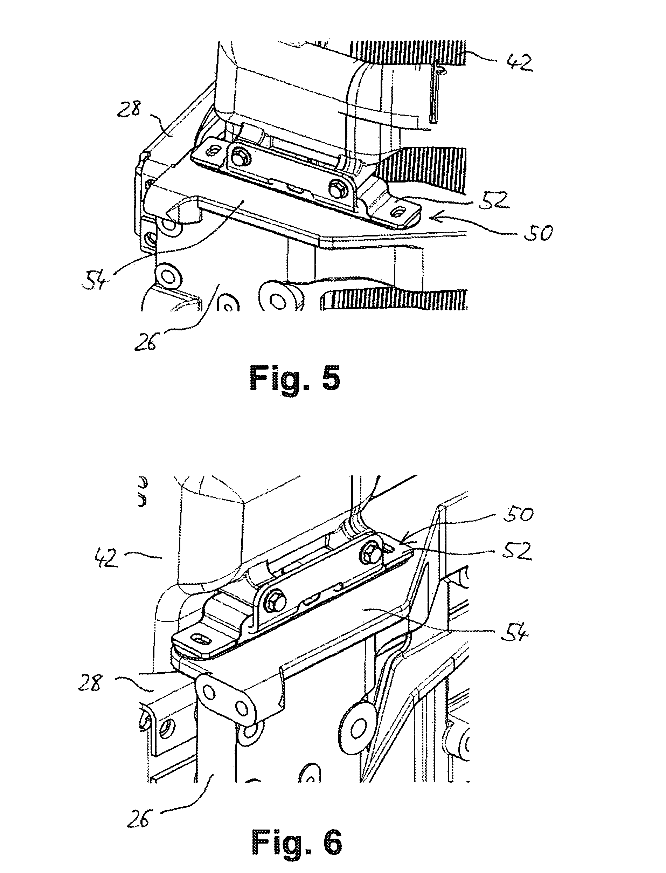

Fig. 4 shows the same embodiment as in the foregoing figures, with the difference that a cooler 42 is enclosed between the front parts of the bearing plates 24,26. The cooler 42 as such is known from the state of the art in principle but has an enlarged width greater than the distance between the longitudinal members 14,16. Two vertical lateral surfaces 44,46 of the cooler 42 abut the inner surfaces of the front portions of the bearing plates 24,26. At these lateral surfaces 44,46, cooler suspension members 48,50 are mounted. Fig. 5 and 6 show details of these cooler suspension members 48,50. Each of these cooler suspension members 48,50 comprises a horizontal flange 52 extending in the driving direction of the truck (parallel to the longitudinal members 14,16 of the frame 12). This flange 52 is flanged onto a flat top bearing surface 54 of the respective bearing plate 24,26, namely, at the front portion of the bearing plates 24,26 that is slightly offset outwardly with respect to the rear portion. By mounting the flange 52 of the cooler suspension member 48,50 onto the flat top bearing surface 54, the load caused by the weight of the cooler 42 rests on the bearing plates 24,26, and the cooler 42 is reliably held between the bearing plates 24,26 within the enlarged spacing between the bearing plates 24,26. With respect to Fig. 4, the first traverse member 28 extends in front of the front surface of the cooler 42. All parts of the cab suspension, including the cab suspension members 34 are omitted in Fig. 4.

As can be taken from Fig. 1, the chassis 10 according to this embodiment of the present invention further comprises a second traverse member 60 extending laterally between the front ends of the longitudinal members 14,16 of the frame 12. This second traverse member 60 is slightly cranked to have a central portion 62 extending horizontally in the center between the longitudinal members 14,16, the ends of this central portion 62 being connected to the respective longitudinal members 14,16 by inclined portions 64 forming the ends of the second traverse member 60.

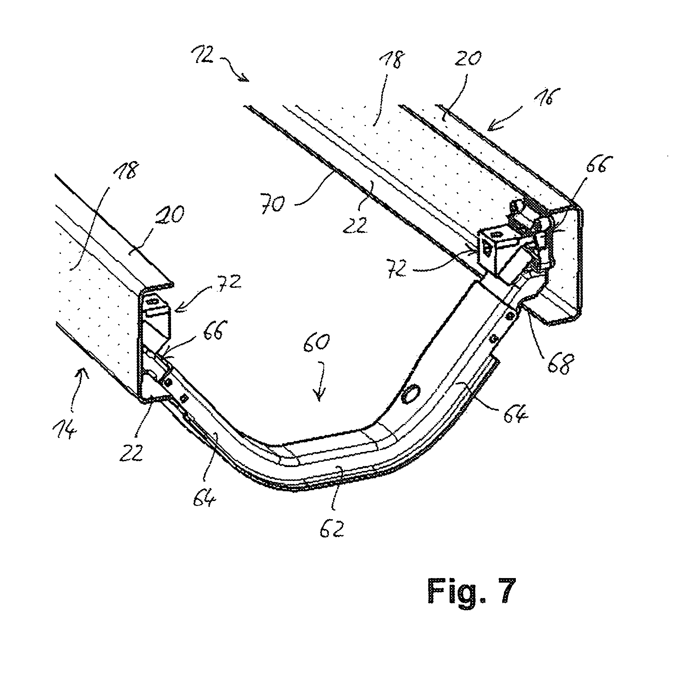

The mounting of the second traverse member 60 is explained in detail with respect to Fig. 7, also showing the overall arrangement of the second traverse member 60 between the longitudinal members 14,16. Other parts of the chassis, including the bearing plates 24,26, a first traverse member 28 and all parts of the cooler suspension have been omitted in Fig. 7.

The ends 64 of the second traverse member 60 are supported by respective support members 66 that are flanged to inner surfaces of vertical flanges 18 of the longitudinal members 14,16. The connection between the ends 64 of the second traverse member 60 and the support member 66 is achieved by bolt connections or the like. Each support member 66 is provided with a recess 68 at this bottom to receive the inner edge 70 of the bottom flange 22 of a longitudinal member 14,16. By this arrangement the load of the second traverse member 60 bears on the bottom flanges 22 of the longitudinal members 14,16.

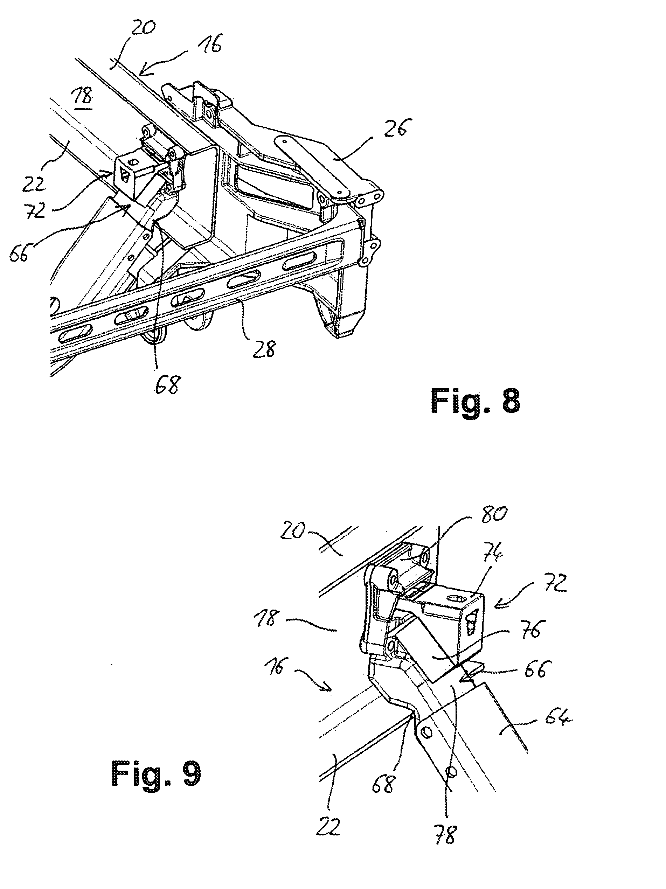

Fig. 8 shows a further detail of one front corner of the frame, including one longitudinal member 16, one bearing plate 26 attached to this longitudinal member 16, one part of the first traverse member 28 and the second traverse member 60 arranged behind the first traverse member 28 with respect to the driving direction and being connected to the front end of the longitudinal member 16 by the support member 66 that has already been described above with respect to Fig. 7. On the support member 66, an engine support member 62 is mounted. As can also be taken from Fig. 9, this engine support member 72 comprises a metal block 74 with triangular cross section. A bottom surface of this metal block 74 rests on a damping block 76 formed of an elastic material like rubber or an elastomer. The bottom surface of the damping block 76 rests on an inclined top surface 78 of the support member 66 for connection the second traverse member 60 to the longitudinal members 14,16. Fig. 9 also shows a vertical flange portion 80 of the support member 66 to be flanged at the inner surface of the vertical flange 18 of the longitudinal member 16.

By this arrangement, the support member 66 connects the second traverse member 60 with the longitudinal members 14,16 but at the same time supports the engine support member 72 for supporting the engine of the truck. The mounting of the support member 66 to the longitudinal members 14,16 is independent from the mounting of the bearing plates 24,26 to the front ends of the longitudinal members 14,16.

The bearing plates 24,26 are further provided with a support portion 82 for receiving the front end of a leaf spring (not shown in Fig. 1) of a wheel suspension at the respective side of the chassis 10. This support portion 82 at each bearing plate 24,26 extends downwardly from the rear portion of the bearing plate 24,26 and comprises two flange members 84,86 arranged in parallel spaced apart from each other in the lateral direction. Between the flanges 84,86, the end of the leaf spring can be inserted. Recesses 88 in the flanges 84,86 are for inserting a bolt or the like to mount the end of the leaf spring between the flanges 84,86.

The bearing plates 24,26 further comprise support portions for receiving the ends of a front underrun protection at the front end of the chassis 10 and for a bumper extending between the bearing plates 24,26 at the front of the vehicle. While the front underrun protection member and the bumper are not shown in the figures, their respective ends can be mounted to the front portions of the bearing plates 24,26 with the help of insertion holes 90 provided at the flange forming the front portion of the respective bearing plates 24,26. These insertions holes 90 are provided to receive bolts or the like for fastening the front underrun protection member, the bumper or any other desired functional unit of the truck to the bearing plate 24,26 at the front end of the chassis 10. Therefore the arrangement of the holes 90 is not limited to the arrangement shown in the figures but can be modified suitably.

## Claims

1. Chassis (10) of a forward-control truck with a tiltable cab, comprising:
- a frame (12) with two longitudinal members (14, 16) being spaced apart from each other;
- at least one traverse member (28) extending between said longitudinal members (14, 16);
- a cooler suspension for supporting a cooler (42) at the front end of the frame (12);
- a cab suspension for supporting a cab above the front end of the frame (12);
- a pair of bearing plates (24, 26) disposed at the front end of the frame (12), each bearing plate (24, 26) of said pair being flanged to a front end of one of said longitudinal members (14, 16) so that the bearing plates (24, 26) are spaced apart in a lateral direction and the distance between the bearing plates (24, 26) widens towards the front end of the frame (12), each end of said traverse member (28) being flanged to a front end of a respective bearing plate (24, 26) and supporting the lower end of one cab suspension member (34), said cooler suspension comprising two opposed cooler suspension members (48, 50) disposed laterally at the cooler (42) and being flanged onto flat top bearing surfaces (54) of the bearing plates (24, 26), **characterized in that** each of said bearing plates (24, 26) is provided with a support portion (82) for receiving the front end of a leaf spring of a wheel suspension at the respective side of the chassis, said support portion (82) being located at a lower part of the bearing plate (24, 26).

2. Chassis according to claim 1, **characterized in that** each cab suspension member (48, 50) is also flanged to the bearing plate (24, 26) to which the respective end of the traverse member (28) is flanged.

3. Chassis according to one of claims 1 or 2, **characterized in that** each of said bearing plates (24, 26) is provided with a support portion for receiving one end of a front under run protection member and/or a bumper extending between the bearing plates (24, 26) at the front end of the frame (12).

4. Chassis according to one of preceding claims, **characterized by** a second traverse member (60) extending laterally behind said first traverse member (28), said second traverse member (60) being connected to the longitudinal members (14, 16) of the frame (12) by support members (66) that are flanged to inner surfaces of said longitudinal members (14, 16), each of said support members (66) supporting one end (64) of second traverse member (60).

5. Chassis according to claim 4, **characterized in that** said longitudinal members (14, 16) of the frame (12) comprise bottom flanges (22) extending inwardly, and said support members for connecting the second traverse member (60) to the longitudinal members (14, 16) bear on the inner edges of said bottom flanges (22).

6. Chassis according to claim 4 or 5, **characterized by** engine support members (72) for supporting an engine block of the truck, said engine support members (72) being supported by upper support surfaces on top of said support members (66) for connecting the second traverse member (60) to the longitudinal members (14, 16).

## Patentansprüche

1. Chassis (10) eines Frontlenkerlastkraftwagens mit einem kippbaren Führerhaus, umfassend:
- einen Rahmen (12) mit zwei Längselementen (14, 16), die voneinander beabstandet sind;
- zumindest ein Querelement (28), das sich zwischen den Längselementen (14, 16) erstreckt;
- eine Kühleraufhängung zum Tragen eines Kühlers (42) an dem vorderen Ende des Rahmens (12);
- eine Führerhausaufhängung zum Tragen eines Führerhauses über dem vorderen Ende des Rahmens (12);
- ein Paar Lagerplatten (24, 26), die an dem vorderen Ende des Rahmens (12) angeordnet sind, wobei jede Lagerplatte (24, 26) des Paares an ein vorderes Ende von einem der Längselemente (14, 16) derart angeflanscht ist, dass die Lagerplatten (24, 26) in einer seitlichen Richtung beabstandet ist und der Abstand zwischen den Lagerplatten (24, 26) sich in Richtung des vorderen Endes des Rahmens (12) erweitert, wobei jedes Ende des Querelements (28) an ein vorderes Ende einer jeweiligen Lagerplatte (24, 26) angeflanscht ist und das untere Ende von einem Führerhausaufhängungselement (34) trägt, wobei die Kühleraufhängung zwei entgegengesetzte Kühleraufhängungselemente (48, 50) umfasst, die seitlich an dem Kühler (42) angeordnet und an flachen oberen Lagerflächen (54) der Lagerplatten (24, 26) angeflanscht sind,
**dadurch gekennzeichnet, dass** jede der Lagerplatten (24, 26) mit einem Trägerabschnitt (82) zur Aufnahme des vorderen Endes einer Blattfeder einer Radaufhängung an der jeweiligen Seite des Chassis versehen ist, wobei der Trägerabschnitt (82) an einem unteren Teil der Lagerplatte (24, 26) gelegen ist.

2. Chassis nach Anspruch 1,
**dadurch gekennzeichnet, dass** jedes Führerhausaufhängungselement (48, 50) ebenfalls an die Lagerplatte (24, 26) angeflanscht ist, an die das jeweilige Ende des Querelements (28) angeflanscht ist.

3. Chassis nach einem der Ansprüche 1 oder 2,
**dadurch gekennzeichnet, dass** jede der Lagerplatten (24, 26) mit einem Trägerabschnitt zur Aufnahme eines Endes eines Frontunterfahrschutzelements und/oder eines Stoßfängers versehen ist, das bzw. der sich zwischen den Lagerplatten (24, 26) an dem vorderen Ende des Rahmens (12) erstreckt.

4. Chassis nach einem der vorhergehenden Ansprüche,
**gekennzeichnet durch** ein zweites Querelement (60), das sich seitlich hinter dem ersten Querelement (28) erstreckt, wobei das zweite Querelement (60) mit den Längselementen (14, 16) des Rahmens (12) **durch** Trägerelemente (66) verbunden ist, die an Innenflächen der Längselemente (14, 16) angeflanscht sind, wobei jedes der Trägerelemente (66) ein Ende (64) des zweiten Querelements (60) trägt.

5. Chassis nach Anspruch 4,
**dadurch gekennzeichnet, dass** die Längselemente (14, 16) des Rahmens (12) untere Flansche (22) umfassen, die sich nach innen erstrecken, und die Trägerelemente zum Verbinden des zweiten Querelements (60) mit den Längselementen (14, 16) auf den Innenkanten der unteren Flansche (22) aufliegen.

6. Chassis nach Anspruch 4 oder 5,
**gekennzeichnet durch** Motorträgerelemente (72) zum Tragen eines Motorblocks des Lastkraftwagens, wobei die Motorträgerelemente (72) **durch** obere Trägerflächen oben auf den Trägerelementen (66) zum Verbinden des Querelements (60) mit den Längselementen (14, 16) getragen sind.

## Revendications

1. Châssis (10) d'un camion à cabine avancée avec une cabine inclinable, comprenant :
- un cadre (12) avec deux organes longitudinaux (14, 16) espacés l'un de l'autre ;
- au moins un organe de traverse (28) s'étendant entre lesdits organes longitudinaux (14, 16) ;
- une suspension de refroidisseur permettant de supporter un refroidisseur (42) au niveau de l'extrémité avant du cadre (12) ;
- une suspension de cabine permettant de supporter une cabine au-dessus de l'extrémité avant du cadre (12) ;
- une paire de plaques d'appui (24, 26) disposées sur l'extrémité avant du cadre (12), chaque plaque d'appui (24, 26) de ladite paire étant fixée par bride sur une extrémité avant de l'un desdits organes longitudinaux (14, 16) de sorte que les plaques d'appui (24, 26) sont espacées dans une direction latérale et la distance entre les plaques d'appui (24, 26) s'élargit vers l'extrémité avant du cadre (12), chaque extrémité dudit organe de traverse (28) étant fixée par bride sur une extrémité avant d'une plaque d'appui respective (24, 26) et supportant l'extrémité inférieure d'un organe de suspension de cabine (34), ladite suspension de refroidisseur comprenant deux organes de suspension de refroidisseur opposés (48, 50) disposés latéralement au niveau du refroidisseur (42) et fixés par bride sur les surfaces d'appui supérieures plates (54) des plaques d'appui (24, 26), **caractérisé en ce que** chacune desdites plaques d'appui (24, 26) est pourvue d'une portion de support (82) permettant de recevoir l'extrémité avant d'un ressort à lame d'une suspension de roue sur le côté respectif du châssis, ladite portion de support (82) étant située sur une partie inférieure de la plaque d'appui (24, 26).

2. Châssis selon la revendication 1, **caractérisé en ce que** chaque organe de suspension de cabine (48, 50) est également fixé par bride sur la plaque d'appui (24, 26) sur laquelle l'extrémité respective de l'organe de traverse (28) est fixée par bride.

3. Châssis selon l'une des revendications 1 ou 2, **caractérisé en ce que** chacune desdites plaques d'appui (24, 26) est pourvue d'une portion de support permettant de recevoir une extrémité d'un organe de protection anti-encastrement avant et/ou d'un pare-chocs s'étendant entre les plaques d'appui (24, 26) sur l'extrémité avant du cadre (12).

4. Châssis selon l'une des revendications précédentes, **caractérisé par** un second organe de traverse (60) s'étendant latéralement entre ledit premier organe de traverse (28), ledit second organe de traverse (60) étant relié aux organes longitudinaux (14, 16) du cadre (12) par des organes de support (66) qui sont fixés par bride sur les surfaces internes desdits organes longitudinaux (14, 16), chacun desdits organes de support (66) supportant une extrémité (64) du second organe de traverse (60).

5. Châssis selon la revendication 4, **caractérisé en ce que** lesdits organes longitudinaux (14, 16) du cadre (12) comprennent des brides inférieures (22) s'étendant vers l'intérieur, et lesdits organes de support permettant de relier le second organe de traverse (60) aux organes longitudinaux (14, 16) appuient sur les bords internes desdites brides inférieures (22).

6. Châssis selon la revendication 4 ou 5, **caractérisé par** des organes de support de moteur (72) permettant de supporter un bloc-moteur du camion, lesdits organes de support de moteur (72) étant supportés par des surfaces de support supérieures au-dessus desdits organes de support (66) permettant de relier le second organe de traverse (60) aux organes longitudinaux (14, 16).
